# EUROPÄISCHE PATENTSCHRIFT

(11) **EP 2 893 797 B1**
(45) Veröffentlichungstag und Bekanntmachung des Hinweises auf die Patenterteilung: **25.07.2018**
(21) Anmeldenummer: 14195069.1
(22) Anmeldetag: 27.11.2014
(51) Int. Cl.: A01D 41/12, A01D 43/073, A01D 43/08

(54) **ERNTEVORRICHTUNG**
HARVESTING DEVICE
DISPOSITIF DE RÉCOLTE

(30) Priorität: 08.01.2014 DE 102014100136
(43) Veröffentlichungstag der Anmeldung: 15.07.2015
(73) Patentinhaber: CLAAS Selbstfahrende Erntemaschinen GmbH, 33428 Harsewinkel (DE)
(72) Erfinder: Krause, Thilo, 39249 Glinde (DE); Kriebel, Bastian, 48155 Münster (DE); Middelberg, René, 49080 Osnabrück (DE)

(56) Entgegenhaltungen:
- EP-A1- 1 645 178
- WO-A1-2013/120079

## Beschreibung

Die vorliegende Erfindung betrifft eine Erntevorrichtung mit einer landwirtschaftlichen Erntemaschine und einem Transportfahrzeug, sowie ein Verfahren zur Regelung der Geschwindigkeit für eine Erntevorrichtung.

Landwirtschaftliche Erntemaschinen, die Erntegut aufnehmen und bearbeiten, wie beispielsweise Feldhäcksler oder Mähdrescher, umfassen üblicherweise eine verschwenkbare Vorrichtung zum Überladen des Erntegutes auf ein Transportfahrzeug, welches beispielsweise ein traktorgezogener Anhänger oder einen Lastkraftwagen sein kann. Je nach Art der Erntemaschine kann das Überladen kontinuierlich oder diskontinuierlich erfolgen, wobei in den meisten Fällen das Erntegut zur Zeitoptimierung während der Fahrt der Erntemaschine übergeladen wird. Das mittels der verschwenkbaren Überladevorrichtung verbrachte Erntegut trifft dabei an einem Auftreffpunkt auf dem Transportfahrzeug auf. Ein Verschwenken der Überladevorrichtung zum Überladen des Erntegutes kann manuell von einem Bediener der Erntemaschine oder automatisch durch eine Steuerung bestimmt werden. Die Überladevorrichtung kann dabei derart verschwenkt werden, dass die Position des Auftreffpunktes variiert wird, um eine möglichst vollständige Ausnutzung des verfügbaren Transportvolumens des Transportfahrzeuges zu erreichen. Um den Verlust an Erntegut während des Überladens möglichst gering zu halten und das Ladevolumen des Transportfahrzeuges effizient auszunutzen, ist es erforderlich, dass sich der Bediener der Erntemaschine für das Überladen auf die Steuerung der Überladevorrichtung konzentriert, während er weiter durch den abzuerntenden Bestand an Erntegut fahren muss, wodurch seine Arbeitsbelastung weiter erhöht wird.

Aus der EP 2 020 174 A1 ist eine Vorrichtung zum Überladen des Erntegutes von einer landwirtschaftlichen Arbeitsmaschine auf ein Transportfahrzeug bekannt, die den Bediener durch eine automatische Steuerung der Überladevorrichtung entlasten soll. Die landwirtschaftliche Arbeitsmaschine weist dabei einen Auswurfstutzen zum Fördern des aufgenommenen und verarbeiteten Erntegutes auf, für dessen Richtungssteuerung eine elektro-optische Vorrichtung bereitgestellt wird, die neben der Entlastung des Bedieners eine effiziente Befüllung des Transportfahrzeuges ermöglichen soll. Die Vorrichtung bedarf jedoch weiterhin der Überwachung durch den Bediener, da es bei dem automatischen Verschwenken der Überladevorrichtung zu Störungen kommen kann, beispielsweise durch Kollision der Überladevorrichtung mit dem Transportfahrzeug. Zudem kann es zu einem Verschwenken der Überladevorrichtung aus dem direkten Sichtfeld des Bedieners kommen, wodurch eine Überwachung der Überladevorganges weiter erschwert und ein Eingreifen des Bedieners erforderlich würde.

Aus der EP 2 100 495 A1 ist eine weitere landwirtschaftliche Erntemaschine zum Aufnehmen und Bearbeiten von Erntegut bekannt, die eine um eine horizontale und vertikale Achse verschwenkbaren Überladeeinrichtung zum Überladen von Erntegut auf ein Transportfahrzeug aufweist. Die Überladeeinrichtung der sich im Erntebetrieb befindenden Erntemaschine wird dabei in Abhängigkeit von verschiedenen Betriebskriterien der Erntemaschine entgegen der Fahrtrichtung der Erntemaschine manuell und/oder automatisch verschwenkt, wobei Betriebskriterien beispielsweise die Erntefahrgeschwindigkeit, die Erntegutdurchsatzmenge und/oder der Lenkwinkel der Erntemaschine sein können. Hierbei soll besonders bei der Fahrt im Vorgewende oder beim Durchfahren von Bestandslücken ein verlustfreies Überladen ermöglicht werden. Die automatisch verschwenkbare Überladevorrichtung benötigt ebenfalls ein hohes Maß an Aufmerksamkeit durch den Bediener, um ein rechtzeitiges Eingreifen bei einer möglichen Störung oder einem Verschwenken aus dem direkten Sichtfeld des Bedieners zu vermeiden.

Es ist daher die Aufgabe der Erfindung, eine Erntevorrichtung sowie ein Verfahren bereitzustellen, die eine Verbesserung der Steuerung einer Überladevorrichtung einer landwirtschaftlichen Erntemaschine und eine weitere Verringerung der Arbeitsbelastung eines Bedieners der landwirtschaftlichen Erntemaschine ermöglichen.

Die Aufgabe wird erfindungsgemäß durch die kennzeichnenden Merkmale der Patentansprüche 1 und 8 gelöst. Vorteilhafte Ausgestaltungen und Weiterbildungen der Erfindung ergeben sich aus den nachstehenden Unteransprüchen und den nachfolgenden Beschreibungen.

Eine erfindungsgemäße Erntevorrichtung weist eine Erntegut abgebenden landwirtschaftlichen Erntemaschine mit einer um einen Schwenkwinkel verschwenkbaren Überladevorrichtung zum Überladen des Erntegutes auf, wobei ein Soll-Schwenkwinkel zur Abgabe des Erntegutes einstellbar ist, und einem das Erntegut aufnehmenden Transportfahrzeug, wobei das von der landwirtschaftlichen Erntemaschine abgegebene Erntegut auf dem Transportfahrzeug an einem einstellbaren Auftreffpunkt auftrifft, wobei bei einer von dem Soll-Schwenkwinkel abweichenden Auslenkung der Überladevorrichtung eine Rückführung der Überladevorrichtung auf den Soll-Schwenkwinkel, mittels einer Änderung der Geschwindigkeit der landwirtschaftlichen Erntemaschine und/oder des Transportfahrzeuges regelbar ist, wobei die Position des Auftreffpunktes im Wesentlichen unverändert bleibt.

Durch die Änderung der Geschwindigkeit der landwirtschaftlichen Erntemaschine und/oder des Transportfahrzeuges können die Erntemaschine und das Transportfahrzeug während des Überladens von Erntegut derart relativ zueinander ausgerichtet werden, dass die verschwenkte Überladevorrichtung wieder in eine Soll-Schwenkwinkel zurückgeschenkt werden kann. Der Soll-Schwenkwinkel kann dabei derart gewählt sein, dass die Überladevorrichtung im direkten Sichtfeld eines Bedieners der Erntemaschine angeordnet ist, und/oder dass die Überladevorrichtung zur Vermeidung von Kollisionen mit dem Transportfahrzeug einen größtmöglichen vertikalen Abstand zu diesem aufweist. Dies hat den Vorteil, dass unter im Wesentlicher Beibehaltung des eingestellten Auftreffpunktes während des Überladens von Erntegut eine Rückführung der verschwenkten Überladevorrichtung auf den Soll-Schwenkwinkel ermöglicht wird, wodurch eine Überwachung des Überladevorganges durch den Bediener vereinfacht und dadurch die Arbeitsbelastung des Bedieners gesenkt werden kann. Zudem kann die Gefahr einer Kollision der Überladevorrichtung mit dem Transportfahrzeug bei einem Verschwenken der Überladevorrichtung, beispielsweise bei einer Veränderung des Auftreffpunktes, verringert werden, so dass der Überwachungsbedarf und damit die Arbeitsbelastung des Bedieners weiter reduziert werden kann.

In einer Weiterbildung der Erfindung wird in Abhängigkeit des Schwenkwinkels ein Abstand eines freien, das Erntegut abgebenden Endes der Überladevorrichtung zum Boden variiert. Das freie, das Erntegut abgebende Ende ist an einem der Erntemaschine abgewandten Ende der Überladevorrichtung angeordnet. Der Abstand ist dabei der sich in Abhängigkeit des Schwenkwinkels der Überladevorrichtung einstellende Abstand zwischen dem freien Ende und einem planen Boden, wobei die Erntemaschine beim Verschwenken im Wesentlichen waagerecht auf diesem planen Boden angeordnet ist. Eine Änderung des Abstandes in Abhängigkeit des Schwenkwinkels kann beispielsweise bei einer Erntemaschine in Form eines Mähdreschers der Fall sein, dessen Überladevorrichtung um eine nicht senkrecht angeordnete Schwenkachse verschwenkbar ist. Dadurch kann sich das freie Ende bei einem Verschwenken der Überladevorrichtung beispielsweise auf einer Bahnkurve mit variierendem Abstand zum Boden bewegen. Durch die Änderung des Abstandes in Abhängigkeit von dem Schwenkwinkel der Überladevorrichtung kann der Abstand des freien Endes, insbesondere zum Boden, direkt aus dem Schwenkwinkel abgeleitet werden.

Bevorzugt ist der Soll-Schwenkwinkel derart ausgewählt und eingestellt, dass bei dem Soll-Schwenkwinkel das freie Ende der Überladevorrichtung den größten Abstand zum Boden aufweist. Dies hat den Vorteil, dass das freie Ende auch den größtmöglichen Abstand zu einem unter dem freien Ende angeordneten Transportfahrzeug aufweist, wodurch eine unbeabsichtigte Kollision der Überladevorrichtung mit dem Transportfahrzeug, beispielsweise bei einer Veränderung des Auftreffpunktes, vermieden werden kann.

Die Rückführung der ausgelenkten Überladevorrichtung auf den Soll-Schwenkwinkel ist automatisch regelbar. Die Erntevorrichtung, insbesondere die Erntemaschine, weist mindestens eine für die automatische Regelung der Rückführung geeignete Auswerte- und Steuervorrichtung auf, durch welche insbesondere die Geschwindigkeit der Erntemaschine und/oder des Transportfahrzeuges regelbar ist. Ein automatische Rückführen der Überladevorrichtung hat den Vorteil, dass der Bediener die Rückführung nicht manuell ausführen muss, wodurch die Arbeitsbelastung des Bedieners weiter gesenkt werden kann.

Vorteilhafter Weise ist der Auftreffpunkt des Erntegutes automatisch einstellbar. Dies ermöglicht sowohl ein effizientes automatisches Befüllen des Transportfahrzeuges, welches den Bediener entlastet,

Dadurch, dass die Überladevorrichtung automatisch dem eingestellten Auftreffpunkt nachgeführt wird kann der Bediener weiter entlastet werden. Die automatische Einstellung und/oder Nachführung des Auftreffpunktes des Erntegutes ermöglicht zudem den Einsatz einer Überladestrategie bei der Befüllung eines Transportfahrzeuges, beispielsweise in Abhängigkeit der Art des Transportfahrzeuges.

In einer weiteren vorteilhaften Ausgestaltung der Erfindung ist durch einen Bediener mindestens ein Fahrzeug auswählbar, welches für die Rückführung der Überladevorrichtung nutzbar und in seiner Geschwindigkeit regelbar ist. Der Bediener kann hierbei mindestens eine Fahrzeug, die landwirtschaftliche Erntemaschine, das Transportfahrzeug oder beide Fahrzeuge, auswählen, dessen Geschwindigkeit dann zur Rückführung der Überladevorrichtung auf den Soll-Schwenkwinkel regelbar sind. Dies hat den Vorteil, dass insbesondere bei einer automatischen Regelung der Rückführung der Bediener die Möglichkeit hat, eine Vorgabe einzugeben, beispielsweise in Abhängigkeit davon, welche Auswerte- und Steuervorrichtungen die Erntemaschine und/oder das Transportfahrzeug aufweisen. Weiterhin kann der Bediener auswählen, dass nur die Geschwindigkeit des Transportfahrzeuges zur Rückführung regelbar ist, wodurch die Erntemaschine während des Überladens mit einer höheren Geschwindigkeit das Ernten fortsetzen kann, wodurch die Ernteleistung weiter erhöht werden kann. Erfindungsgemäß ist mindestens eine Auswerte- und Steuervorrichtung zur Steuerung der Überladevorrichtung und der Geschwindigkeit der Erntemaschine und/oder des Transportfahrzeuges vorgesehen, wobei die Geschwindigkeit der Erntemaschine und/oder des Transportfahrzeuges durch die mindestens eine Auswerte- und Steuervorrichtung in Abhängigkeit von der Auslenkung der Überladevorrichtung steuerbar ist. Die Auswerte- und Steuervorrichtung kann das Verschwenken der Überladevorrichtung, beispielsweise zum Ansteuern eines eingestellten Auftreffpunktes oder bei der Rückführung der Überladevorrichtung, steuern. Bevorzugt kann der Auftreffpunkt durch die Auswerte- und Steuervorrichtung, beispielsweise basierend auf einer Überladestrategie, bestimmbar und einstellbar sein. Zur Rückführung der Überladevorrichtung auf den Soll-Schwenkwinkel kann die Auswerte- und Steuervorrichtung die Geschwindigkeit der Erntemaschine und/oder des Transportfahrzeuges in Abhängigkeit des Schwenkwinkels regeln. Die mindestens eine Auswerte- und Steuervorrichtung kann auf der Erntemaschine und/oder dem Transportfahrzeug angeordnet sein. Mehrere Auswerte- und Steuereinheiten können zur unidirektionalen und/oder bidirektionalen Übertragung von Daten, insbesondere über eine zu regelnde Geschwindigkeit des jeweiligen Fahrzeuges, Kommunikationsmodule zur drahtlosen Kommunikation aufweisen. Die mindestens eine Auswerte- und Steuervorrichtung hat den Vorteil, dass dadurch eine weitestgehend automatisierte Regelung der Überladevorrichtung und der Geschwindigkeiten zur Rückführung der Überladevorrichtung erfolgen kann, wodurch die Arbeitsbelastung des Bedieners gesenkt werden kann.

In einer bevorzugten Ausgestaltung der Erfindung ist eine Sensorvorrichtung zur Bestimmung des Schwenkwinkels und/oder der Auslenkung der Überladevorrichtung vorgesehen. Die Sensorvorrichtung kann eine elektro-optische Vorrichtung sein, beispielsweise in Form einer 3D-Kamera. Durch die Sensorvorrichtung kann der aktuelle Schwenkwinkel, bezogen auf die Längsachse der Erntemaschine und/oder eine eingeklappte Ruheposition der Überladevorrichtung, gemessen werden. Eine elektro-optische Vorrichtung ermöglicht eine berührungslose Bestimmung des aktuellen Schwenkwinkels und/oder einer vorgenommen Auslenkung um einen bestimmten Winkel, beispielsweise bei einem Verschenken der Überladevorrichtung von einem ersten Auftreffpunkt zu einem zweiten Auftreffpunkt. Darüber hinaus kann eine elektro-optische Sensorvorrichtung, in deren Erfassungsbereich der aktuelle erste Auftreffpunkt und einen nachfolgend anzusteuernder zweiter Auftreffpunkt liegt, eine vorzunehmende Änderung des Schwenkwinkels bereits vor oder während des Verschenkens bestimmen. Dies hat den Vorteil, dass eine Änderung der Geschwindigkeit zur Rückführung der Überladevorrichtung zeitnah, insbesondere zeitgleich, mit dem Verschwenken der Überladevorrichtung von dem ersten zu dem zweiten Auftreffpunkt vorgenommen werden kann. Zudem kann eine bereits vorhandene elektro-optischen Sensorvorrichtung kostengünstige für die Erntevorrichtung zur Regelung der Geschwindigkeit genutzt werden.

Weiterhin betrifft die Erfindung ein Verfahren zur Regelung der Geschwindigkeit einer Erntevorrichtung mit einer Erntegut abgebenden landwirtschaftlichen Erntemaschine mit einer um einen Schwenkwinkel verschwenkbaren Überladevorrichtung zum Überladen des Erntegutes, und einem das Erntegut in einem Auftreffpunkt aufnehmenden Transportfahrzeug, wobei ein Soll-Schwenkwinkel zur Abgabe des Erntegutes und der Auftreffpunkt eingestellt werden, und bei einer von dem Soll-Schwenkwinkel abweichenden Auslenkung der Überladevorrichtung eine Rückführung der Überladevorrichtung bei im Wesentlichen unveränderter Position des Auftreffpunktes auf den Soll-Schwenkwinkel mittels einer Änderung der Geschwindigkeit der landwirtschaftlichen Erntemaschine und/oder des Transportfahrzeuges geregelt wird. Vorteilhaft ist, dass unter im Wesentlicher Beibehaltung des eingestellten Auftreffpunktes während des Überladens von Erntegut eine Rückführung der verschwenkten Überladevorrichtung auf den Soll-Schwenkwinkel ermöglicht wird. Dadurch kann die Überladevorrichtung in eine von dem Bediener einfach, insbesondere direkt, beobachtbare Position verbracht werden, wodurch die Arbeitsbelastung des Bedieners verringert werden kann. Weiterhin ist vorteilhaft, dass die Gefahr einer Kollision der Überladevorrichtung mit dem Transportfahrzeug bei einem Verschwenken, beispielsweise bei einer Veränderung des Auftreffpunktes, verringert werden kann, so dass aufgrund eines verringerten Überwachungsbedarfs die Arbeitsbelastung des Bedieners weiter reduziert werden kann.

In einer weiteren Ausgestaltung der Erfindung kann in Abhängigkeit des Schwenkwinkels ein Abstand eines freien, das Erntegut abgebenden Endes der Überladevorrichtung zum Boden variiert werden. Eine Änderung des Abstandes in Abhängigkeit des Schwenkwinkels kann beispielsweise durch Verschwenken einer Überladevorrichtung um eine einzelne, nicht senkrecht angeordnete Schwenkachse bewirkt werden, wie dies bei einer Erntemaschine in Form eines Mähdreschers der Fall sein kann. Eine senkrechte Schwenkachse ist rechtwinklig zu dem Boden angeordnet. Durch die Änderung des Abstandes in Abhängigkeit von dem Schwenkwinkel der Überladevorrichtung kann der Abstand des freien Endes direkt aus dem Schwenkwinkel abgeleitet werden.

Vorzugsweise wird der der Soll-Schwenkwinkel derart eingestellt, dass ein freies Ende der Überladevorrichtung bei dem Soll-Schwenkwinkel den größten Abstand zum Boden aufweist. Dies hat den Vorteil, dass das freie Ende auch den größtmöglichen Abstand zu einem unter dem freien Ende angeordneten Transportfahrzeug aufweist, wodurch eine unbeabsichtigte Kollision der Überladevorrichtung mit dem Transportfahrzeug vermieden werden kann.

Besonders bevorzugt wird die Rückführung der ausgelenkten Überladevorrichtung bei im Wesentlichen unveränderter Position des Auftreffpunktes auf den Soll-Schwenkwinkel automatisch geregelt. Ein automatisches Rückführen der Überladevorrichtung hat den Vorteil, dass der Bediener die Rückführung nicht manuell ausführen muss, wodurch die Arbeitsbelastung des Bedieners weiter gesenkt werden kann.

In einer weiter bevorzugten Ausgestaltung der Erfindung werden der Auftreffpunkt und/oder eine Auslenkung der Überladevorrichtung manuell oder automatisch eingestellt. Das automatische Bestimmen und Einstellen und/oder das Auslenken der Überladevorrichtung ermöglichen ein effizientes automatisiertes Befüllen des Transportfahrzeuges, wodurch der Bediener deutlich entlastet werden kann. Durch das manuelle Einstellen des Auftreffpunktes und Auslenken der Überladevorrichtung kann dem Bediener vorteilhafterweise eine Eingreifen oder die vollständige Übernahme der Steuerung ermöglicht werden, wodurch in Situationen, die von einer automatischen Steuerung nicht zuverlässig erfasst werden könnten, ein sicheres und effizientes Überladen gewährleistet werden kann.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1:: eine schematische Draufsicht einer Erntevorrichtung mit einer landwirtschaftlichen Erntemaschine und einem Transportfahrzeug;
- Fig. 2:: eine schematische Seitenansicht einer Erntemaschine mit einer in unterschiedlichen Positionen dargestellten Überladevorrichtung;
- Fig. 3:: eine Draufsicht der in Fig. 1 gezeigten Erntevorrichtung; und
- Fig. 4:: eine Draufsicht der in Fig. 3 gezeigten Erntevorrichtung mit einer in einem Soll-Schwenkwinkel angeordneten Überladevorrichtung.

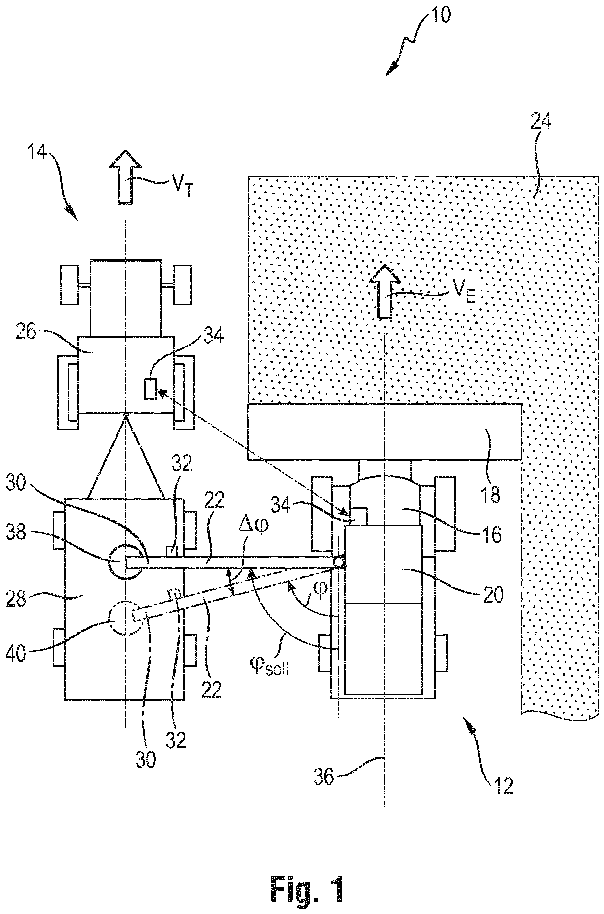

In Figur 1 ist eine Erntevorrichtung 10 mit einer landwirtschaftlichen Erntemaschine 12 und einem Transportfahrzeuges 14 in einer Draufsicht auf einem Feld bei der Ernte dargestellt. Die dargestellte landwirtschaftliche Erntemaschine 12 ist in Form eines Mähdreschers 16 ausgebildet, der dem Fachmann in seinen Grundzügen vertraut ist, so dass von einer Beschreibung seiner üblichen Baugruppen wie dem Vorsatzgerät 18, Dreschaggregat, Reinigung, Korntank 20 und Überladevorrichtung 22 weitgehend abgesehen werden kann. Das Vorsatzgerät 22 nimmt Erntegut 24 auf, von welchem zumindest ein Teil nach der Bearbeitung in dem Korntank 20 aufgenommen wird. Das Erntegut 24 kann beispielsweise Weizen sein, wobei nach der Bearbeitung die ausgedroschenen Weizenkörner in dem Korntank 24 aufgenommen werden können. Je nach zu erntendem Erntegut 24 kann ein anderes Vorsatzgerät 18 ausgewählt und montiert werden. Das Erntegut 24 aus dem Korntank 20 des Mähdreschers 16 kann diskontinuierlich in Intervallen mittels der Überladevorrichtung 22 auf das Transportfahrzeug 14 übergeladen werden. Das Transportfahrzeug 14 kann dabei beispielsweise ein Lastkraftwagen oder ein wie hier dargestellter Traktor 26 mit einem Anhänger 28 sein. Eine landwirtschaftliche Erntemaschine 12 im Sinne der Erfindung kann jede selbstfahrende oder fremdbewegte Erntegut 24 aufnehmende und abgebende landwirtschaftliche Arbeitsmaschine sein, wie ein Feldhäcksler oder der abgebildete Mähdrescher 16.

Die Überladevorrichtung 22 des Mähdrescher 16 ist um mindestens eine Schwenkachse 23 verschwenkbar gelagert. Zum Überladen des Erntegutes 24 wird die Überladevorrichtung 22 um die Schwenkachse 23 herum aus einer Ruheposition in eine Betriebsposition verschwenkt, wobei die Überladevorrichtung 22 in der Betriebsposition unter einem Schwenkwinkel ϕ zur Längsachse 36 der Erntemaschine 12 angeordnet ist, wobei in einer Betriebsposition der Schwenkwinkel ϕ der Überladevorrichtung 22 größer als 0° ist. Der tatsächliche Schenkwinkel ϕ der Überladevorrichtung 22 ist dabei der Ist-Schwenkwinkel ϕᵢₛₜ.

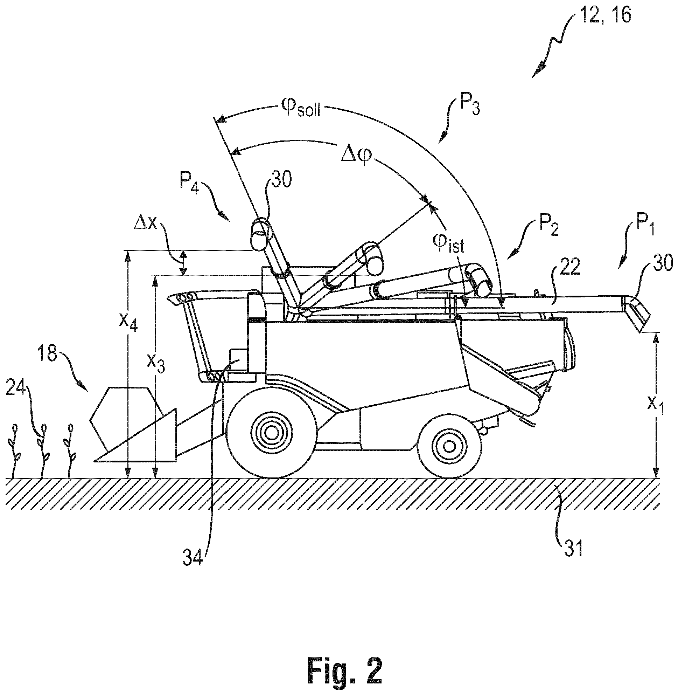

Mähdrescher 16 (Fig. 2) weisen üblicherweise nur eine um eine Schwenkachse 23 verschwenkbare Überladevorrichtung 22 auf, wobei die Schwenkachse 23 der Überladevorrichtung 22 relativ zur Erntemaschine 12 und/oder einem Boden 31 geneigt angeordnet sein kann. Die Schwenkachse 23 des in Fig. 2 dargestellten Mähdreschers 16 ist gegenüber der Senkrechten geneigt, so dass die Überladevorrichtung 22 sich auf einer entsprechend geneigten Kreisbahn bewegt. Durch die Neigung der Kreisbahn wird das freie Ende 30 der Überladevorrichtung 22 bei einem Verschwenken der Überladevorrichtung 22 relativ zum Boden 31 beispielsweise auf einer Kurvenbahn bewegt, wobei der Abstand x des freien Endes 30 zum Boden 31 in Abhängigkeit des Schwenkwinkels ϕ variiert.

Die Überladevorrichtung 22 ist in vier unterschiedlichen Positionen P_{1,2,3,4} dargestellt. In einer ersten Position P₁, die einer Transportposition der Überladevorrichtung 22 entspricht, ist die Überladevorrichtung 22 im Wesentlichen parallel zur Längsachse 36 angeordnet, wobei der Schwenkwinkel ϕᵢₛₜ im Wesentlichen 0° beträgt. In der Transportposition P₁ weist ein freies, das Erntegut 24 abgebende Ende 30 der Überladevorrichtung 22 einen Abstand x₁ zum Boden 31 auf. Der Abstand x₁ kann beispielsweise zwischen einer Unterkante des freien Endes 30 und dem Boden 31 gemessen werden.

In einer zweiten, dritten und vierten Position P_{2,3,4} ist die Überladevorrichtung 22 jeweils um einen entsprechenden Schwenkwinkel ϕ, bezogen auf die Längsachse 36, verschwenkt dargestellt. In der zweiten Position P₂, sowie besonderes der dritten und vierten Position P_{3,4} ist die Überladevorrichtung 22 in eine Betriebsposition zum Überladen von Erntegut 24 verschwenkt. Die vierte Position P₄ kann dabei beispielsweise eine besonders bevorzugte Soll-Position der Überladevorrichtung 22 zum Überladen von Erntegut 24 sein, wobei in der Soll-Position der Überladevorrichtung 22 der entsprechende Schwenkwinkel ϕ einem Soll-Schwenkwinkel ϕₛₒₗₗ entspricht.

Bedingt durch die geneigte Schwenkachse 23 wird die Überladevorrichtung 22 auf einer ebenfalls geneigten Kreisbahn verschwenkt, wodurch bei dem Verschwenken der Überladevorrichtung 22 der Abstand x zwischen dem freien Ende 30 der Überladevorrichtung 22 und dem Boden 31 in Abhängigkeit von dem Schwenkwinkel ϕ variiert. So kann beispielsweise bei einem Verschwenken der Überladevorrichtung 22 aus der vierten Position P₄, der Soll-Position, in die dritte Position P₃ der Abstand x zwischen dem freien Ende 30 der Überladevorrichtung 22 und dem Boden 31 abnehmen, wobei in der vierten Position P₄ der Abstand x₄ zwischen dem freien Ende 30 und dem Boden größer ist, als der Abstand x₃ in der dritten Position P₃. Die Abstandsänderung Δx entspricht dabei der Differenz aus dem Abstand x₄ in der vierten Position P₄ und dem Abstand x₃ in der dritten Position P₃. Bei dem Verschenken der Überladevorrichtung 22 von der vierten Position P₄ in die dritte Position P₃ wird die Überladevorrichtung 22 aus der Soll-Position mit dem Soll-Schwenkwinkel ϕ ₛₒₗₗ in eine Betriebsposition mit dem Ist-Schwenkwinkel ϕᵢₛₜ verschenkt. Die Schwenkwinkeländerung Δϕ entspricht dabei der Differenz aus dem Soll-Schwenkwinkel ϕₛₒₗₗ in der vierten Position P₄ und dem Ist-Schwenkwinkel ϕᵢₛₜ in der dritten Position P₃, wobei der Soll-Schwenkwinkel ϕₛₒₗₗ größer ist, als der Ist-Schwenkwinkel ϕᵢₛₜ in der dritten Position P₃.

Da beim Überladen von Erntegut 24 ein Transportfahrzeug 14 (Fig. 1) unter oder zumindest benachbart zu dem freien Ende 30 der Überladevorrichtung 22 angeordnet ist, kommt es bei einem Verschwenken der Überladevorrichtung 22 folglich auch zu einer Abstandsänderung zwischen dem freien Ende 30 und dem Transportfahrzeug 14, wodurch die Möglichkeit einer Kollision zwischen der Überladevorrichtung 22 und dem Transportfahrzeug 14, beispielsweise mit einer Ladebordwand des Transportfahrzeuges 14, besteht. Zudem kann durch das Verschwenken die Überladevorrichtung 22, insbesondere das freie Ende 30 der Überladevorrichtung 22, aus dem direkten Sichtfeld des Bedieners heraus geschwenkt werden, wodurch eine Überwachung des Überladevorganges erschwert werden kann. In dem direkten Sichtfeld kann der Bediener die Überladevorrichtung 22, insbesondere das freie Ende 30 der Überladevorrichtung 22 ohne großen Aufwand, beispielsweise durch eine Kopfdrehung, unmittelbar sehen und somit überwachen. Um das Risiko einer Kollision der Überladevorrichtung 22 mit dem Transportfahrzeug 14 zu verringern oder eine erschwerte Überwachung zu vermeiden, kann für das Überladen des Erntegutes 24 ein Soll-Schwenkwinkel ϕₛₒₗₗ eingestellt werden, bei dem die Überladevorrichtung 22, insbesondere das freie Ende 30 der Überladevorrichtung 22, den größten möglichen Abstand zum Boden 31 und folglich auch zum Transportfahrzeug 14 aufweist und/oder in dem direkten Sichtfeld des Bedieners angeordnet ist. Der einstellbare Soll-Schwenkwinkel ϕₛₒₗₗ kann auch ein Soll-Schwenkwinkelbereich sein, in dem die Überladevorrichtung 22, insbesondere zum Überladen des Erntegutes 24, angeordnet sein soll.

Der tatsächliche Schwenkwinkel der Überladevorrichtung 22, der Ist-Schwenkwinkel ϕᵢₛₜ, kann durch eine Sensorvorrichtung 32 gemessen werden. Die Sensorvorrichtung 32 kann als elektro-optische Sensorvorrichtung, beispielsweise in Form einer Stereokamera oder einer Laufzeitkamera, einer sogenannten Time-Of-Flight-Kamera, ausgebildet sein. Eine elektro-optische Sensorvorrichtung kann an der Überladevorrichtung 22, beispielsweise an der Überladevorrichtung 22, insbesondere im Bereich des freien Endes 30, angeordnet sein, und mit mindestens einer Auswerte- und Steuervorrichtung 34 verbunden sein.

Die in Fig. 1 dargestellte landwirtschaftliche Erntemaschine 12 in Form eines Mähdreschers 16 bewegt sich mit einer Geschwindigkeit V_{E} über das abzuerntende Feld und nimmt dabei über sein Vorsatzgerät 18 Erntegut 24 zur weiteren Bearbeitung auf. Die Geschwindigkeit V_{E} der Erntemaschine 12 kann dabei beispielsweise durch die mindestens eine Auswerte- und Steuervorrichtung 34 automatisch geregelt werden. Zudem kann die Geschwindigkeit V_{E} mittels einer Tempomatfunktion im Wesentlichen auf einem einstellbaren konstanten Wert gehalten werden. Das bearbeitete Erntegut 24 kann in dem Korntank 20 gespeichert und über die Überladevorrichtung 22 auf den Anhänger 28 übergeladen werden. Die Überladevorrich tung 22 ist bereits in die Betriebsposition verschwenkt, wobei die Überladevorrichtung 22 in einem Ist-Schwenkwinkel ϕᵢₛₜ angeordnet ist der dem eingestellten Soll-Schwenkwinkel ϕₛₒₗₗ entspricht. Die Überladevorrichtung 22 ist dabei im Wesentlichen rechtwinklig zu der Längsachse 36 der Erntemaschine 12 verschwenkt. Beim Überladen trifft das Erntegut 24 auf dem Transportfahrzeug 14, hier dem Anhänger 28, auf einem ersten Auftreffpunkt 38 auf. Abhängig von dem verfügbaren Ladevolumen des Transportfahrzeuges 14 und der Menge an Erntegut 24, welches übergeladen wird oder noch überzuladen ist, kann es erforderlich sein, dass Überladen an mindestens einem zweiten Auftreffpunkt 40 weiterzuführen. Für den Wechsel von dem ersten Auftreffpunkt 38 zu dem zweiten Auftreffpunkt 40 für das Überladen des Erntegutes 24 ist eine Auslenkung der Überladevorrichtung 22 um einen bestimmten Winkel notwendig. Die Auslenkung der Überladevorrichtung 22 entspricht dabei der Schwenkwinkeldifferenz Δϕ, wobei die Schwenkwinkeldifferenz Δϕ die Differenz zwischen dem, dem ersten Auftreffpunkt 38 zugeordneten Schwenkwinkel ϕ, insbesondere dem Soll-Schwenkwinkel ϕₛₒₗₗ, und dem dem zweiten Auftreffpunkt 40 zugeordneten Schwenkwinkel ϕ, insbesondere dem Ist-Schwenkwinkel ϕᵢₛₜ, entspricht.

Die Auslenkung und/oder Schwenkwinkeldifferenz Δϕ kann mittels der Sensorvorrichtung 32, insbesondere einer elektro-optischen Sensorvorrichtung, ermittelt werden. Die Sensorvorrichtung 32, welche den ersten Auftreffpunkt 38 und den zweiten Auftreffpunkt 40 optisch erfasst, kann die Strecke zwischen dem ersten Auftreffpunkt 38 und dem zweiten Auftreffpunkt 40 ermitteln und aus der Länge der Überladevorrichtung 22 die Auslenkung und/oder die Schwenkwinkeldifferenz Δϕ ermitteln, die nötig ist, um die Überladevorrichtung 22 von dem ersten Auftreffpunkt 38 zu dem zweiten Auftreffpunkt 40 zu Verschwenken. Die Förderung des Erntegutes 24 kann hierbei ununterbrochen fortgesetzt werden. Die Ermittlung der Auslenkung kann auch mittels der Auswerte- und Steuereinheit 34 erfolgen, welche mit der Sensorvorrichtung 32 verbunden ist.

Die auf den zweiten Auftreffpunkt 40 verschwenkte Überladevorrichtung 22 ist in Fig. 1 gestrichelt dargestellt, wobei sich der Abstand zwischen dem freien Ende 30 und dem Transportfahrzeug 14 verringert hat, da die Überladevorrichtung 22 aus dem Soll-Schwenkwinkel ϕₛₒₗₗ mit dem größten möglichen Abstand zwischen dem freien Ende 30 und dem Boden 31 heraus in den Ist-Schwenkwinkel ϕᵢₛₜ mit einem kleineren Abstand zwischen dem freien Ende 30 und dem Boden 31 verschwenkt ist.

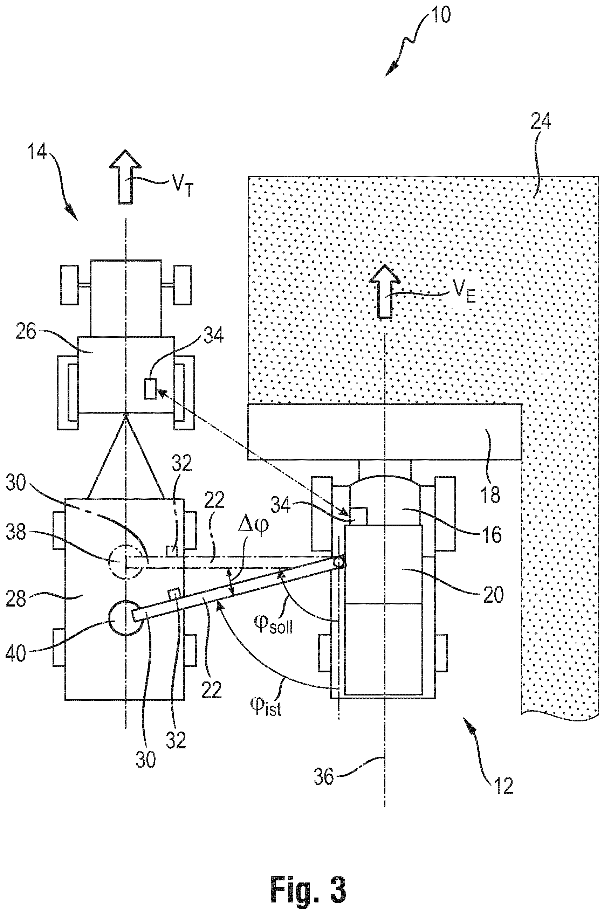

Um die in Figur 3 dargestellte ausgelenkte Überladevorrichtung 22 unter Beibehaltung des zweiten Auftreffpunktes 40 wieder in den Soll-Schwenkwinkel ϕₛₒₗₗ und die Soll-Position zurückzuführen, kann die mindestens eine Auswerte- und Steuereinheit 34 in Abhängigkeit von der Auslenkung, der Schwenkwinkeldifferenz Δϕ, zwischen dem Ist-Schwenkwinkel ϕᵢₛₜ und dem Soll-Schwenkwinkel ϕₛₒₗₗ der Überladevorrichtung 22 die Geschwindigkeit V_{E} der Erntemaschine 12 und/oder die Geschwindigkeit V_{T} des Transportfahrzeuges 14 regeln. Die mindestens eine Auswerte- und Steuervorrichtung 34 kann auf der landwirtschaftlichen Erntemaschine 12 angeordnet sein. Zur Regelung der Geschwindigkeit V_{T} des Transportfahrzeuges 14 kann das Transportfahrzeug 14, beispielsweise der Traktor 26, eine weitere Auswerte- und Steuervorrichtung 34 aufweisen, wobei die weitere Auswerte- und Steuervorrichtung 34 zumindest eine Regelung der Geschwindigkeit V_{T} des Transportfahrzeuges 14 ermöglichen kann. Mehrere Auswerte- und Steuervorrichtungen 34 können mittels Kommunikationsmodulen (nicht dargestellt) drahtlos miteinander Kommunizieren und Daten, insbesondere zur Geschwindigkeitsregelung, austauschen.

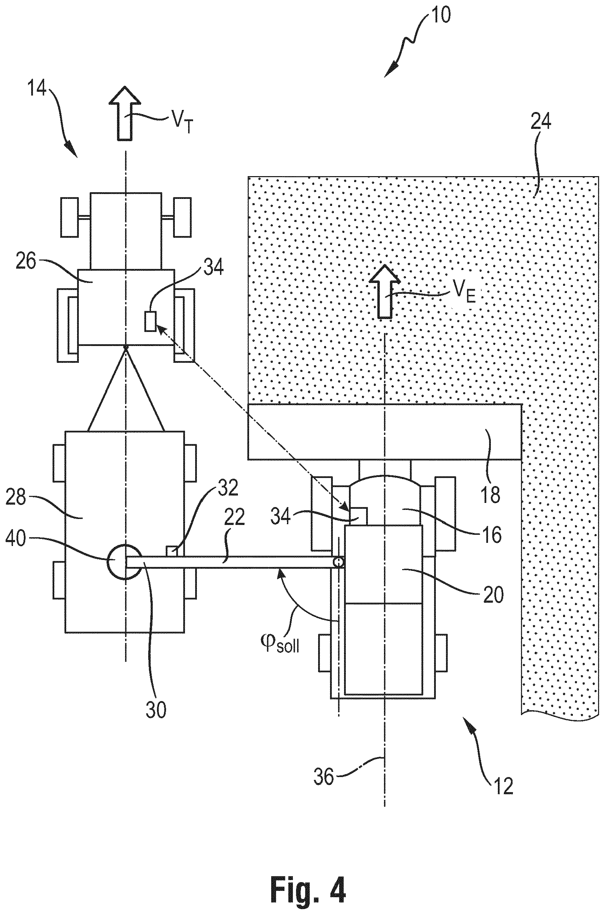

Zur Rückführung der Überladevorrichtung 22 auf den Soll-Schwenkwinkel ϕₛₒₗₗ kann beispielsweise die Geschwindigkeit V_{E} vorübergehend soweit verringert werden, bis die Überladevorrichtung 22 wieder in dem Soll-Schwenkwinkel ϕₛₒₗₗ angeordnet ist, wobei das Erntegut 24 auch in dem Soll-Schwenkwinkel ϕₛₒₗₗ auf dem zweiten Auftreffpunkt 40 auftrifft (Fig. 4). Alternativ kann auch die Geschwindigkeit V_{T} des Transportfahrzeuges 14 vorübergehend soweit erhöht werden, bis die Überladevorrichtung 22, die auf den zweiten Auftreffpunkt 40 ausgerichtet bleibt, wieder in den Soll-Schwenkwinkel ϕₛₒₗₗ zurückgeführt ist. Ferner ist es möglich, das die Geschwindigkeiten V_{E}, V_{T} beider Fahrzeuge geregelt werden, um die Überladevorrichtung 22 auf den Soll-Schwenkwinkel ϕₛₒₗₗ zurückzuführen. Durch den Bediener kann dabei einstellbar sein, welches Fahrzeug 12,14 oder welche Fahrzeuge 12,14 zur Rückführung der Überladevorrichtung 22 in der Geschwindigkeit V_{E}, V_{T} regelbar sein sollen.

Dadurch kann der Bediener auswählen, ob die Erntemaschine 12, das Transportfahrzeug 14, oder beide Fahrzeuge 12, 14 für die Rückführung geregelt werden sollen. Um die Ernteleistung der Erntemaschine 12 möglichst wenig durch das Überladen, beispielsweise durch eine zum Überladen des Erntegutes 24 abgesenkte Geschwindigkeit V_{E}, zu beeinträchtigen, ist es vorteilhaft die Geschwindigkeit V_{E} mit der die Erntemaschine 12 erntet möglichst unverändert zu lassen und nur die Geschwindigkeit V_{T} des Transportfahrzeuges 14 zu regeln. Die auf den zweiten Auftreffpunkt 40 ausgerichtete und auf den Soll-Schwenkwinkel ϕₛₒₗₗ zurückgeführte Überladevorrichtung 22 ist in Figur 4 dargestellt, wobei der Ist-Schwenkwinkel ϕᵢₛₜ dem Soll-Schwenkwinkel ϕₛₒₗₗ entspricht. Das Transportfahrzeug 14 ist dabei, bedingt durch die Verschiebung des Auftreffpunktes 38,40 entgegen der Fahrtrichtung, relativ zur Erntemaschine 12 weiter vorne positioniert als beim Überladen auf den ersten Auftreffpunkt 38 mit einer in den Soll-Schwenkwinkel ϕₛₒₗₗ verschwenkten Überladevorrichtung 22.

### Bezugszeichenliste

- 10: Erntevorrichtung
- 12: landwirtschaftliche Erntemaschine
- 14: Transportfahrzeug
- 16: Mähdrescher
- 18: Vorsatzgerät
- 20: Korntank
- 22: Überladevorrichtung
- 23: Schwenkachse
- 24: Erntegut
- 26: Traktor
- 28: Anhänger
- 30: freies Ende
- 31: Boden
- 32: Sensorvorrichtung
- 34: Auswerte- und Steuervorrichtung
- 36: Längsachse
- 38: erster Auftreffpunkt
- 40: zweiter Auftreffpunkt

- P: Position
- ϕ: Schwenkwinkel
- Δ ϕ: Schwenkwinkeldifferenz
- ϕ ₛₒₗₗ: Soll-Schwenkwinkel
- ϕ ᵢₛₜ: Ist-Schwenkwinkel
- x: Abstand
- Δ x: Abstandsänderung
- V_{E}: Geschwindigkeit Erntemaschine
- V_{T}: Geschwindigkeit Transportfahrzeug

## Patentansprüche

1. Eine Erntevorrichtung mit einer Erntegut (24) abgebenden landwirtschaftlichen Erntemaschine (12) mit einer um einen Schwenkwinkel (ϕₛₒₗₗ) verschwenkbaren Überladevorrichtung (22) zum Überladen des Erntegutes (24), wobei ein Soll-Schwenkwinkel (ϕₛₒₗₗ) zur Abgabe des Erntegutes (ϕₛₒₗₗ) einstellbar ist, und einem das Erntegut (24) aufnehmenden Transportfahrzeug (14), wobei das von der landwirtschaftlichen Erntemaschine (12) abgegebene Erntegut (24) auf dem Transportfahrzeug (14) an einem einstellbaren Auftreffpunkt (38,40) auftrifft, **dadurch gekennzeichnet, dass**
dass bei einer von dem Soll-Schwenkwinkel (ϕₛₒₗₗ) abweichenden Auslenkung der Überladevorrichtung (22) eine Rückführung der Überladevorrichtung (22) auf den Soll-Schwenkwinkel (ϕₛₒₗₗ), mittels einer Änderung der Geschwindigkeit (V_{E}) der landwirtschaftlichen Erntemaschine (12) und/oder des Geschwindigkeit (V_{T}) Transportfahrzeuges (14) regelbar ist, wobei die Position des Auftreffpunktes (38,40) im Wesentlichen unverändert bleibt und wobei mindestens eine Auswerte- und Steuervorrichtung (34) zur Steuerung der Überladevorrichtung (22) und der Geschwindigkeit (V_{E}) der Erntemaschine (12) und/oder der Geschwindigkeit (V_{T}) des Transportfahrzeuges (14) vorgesehen ist, wobei die Geschwindigkeit (V_{E}) der Erntemaschine (12) und/oder die Geschwindigkeit (V_{T}) des Transportfahrzeuges (14) durch die mindestens eine Auswerte- und Steuervorrichtung (34) in Abhängigkeit von der Auslenkung der Überladevorrichtung (22) steuerbar ist und dass eine Sensorvorrichtung (32) zur Bestimmung des Schwenkwinkels (ϕ) und/oder der Auslenkung der Überladevorrichtung (22) vorgesehen ist, und dass der Auftreffpunkt (38,40) des Erntegutes (24) automatisch einstellbar ist.

2. Erntevorrichtung nach Anspruch 1, **dadurch gekennzeichnet, dass** in Abhängigkeit des Schwenkwinkels (ϕ) ein Abstand (x) eines freien, das Erntegut (24) abgebenden Endes (30) der Überladevorrichtung (22) zum Boden (31) variiert.

3. Erntevorrichtung nach Anspruch 1 oder 2, **dadurch gekennzeichnet, dass** bei dem Soll-Schwenkwinkel (ϕₛₒₗₗ) das freie Ende (30) der Überladevorrichtung (22) den größten Abstand zum Boden (31) aufweist.

4. Erntevorrichtung nach einem der vorherigen Ansprüche, **dadurch gekennzeichnet, dass** eine Rückführung der ausgelenkten Überladevorrichtung (22) auf den Soll-Schwenkwinkel (ϕₛₒₗₗ) automatisch regelbar ist.

5. Erntevorrichtung nach einem der vorherigen Ansprüche, **dadurch gekennzeichnet, dass** die Überladevorrichtung (22) automatisch dem eingestellten Auftreffpunkt (38,40) nachgeführt wird.

6. Erntevorrichtung nach einem der vorherigen Ansprüche, **dadurch gekennzeichnet, dass** durch einen Bediener mindestens ein Fahrzeug (12,14) auswählbar ist, welches für die Rückführung der Überladevorrichtung (22) nutzbar und in seiner Geschwindigkeit (V_{E}, V_{T}) regelbar ist.

7. Erntevorrichtung nach einem der vorherigen Ansprüche, **dadurch gekennzeichnet, dass** der Auftreffpunkt (38,40) des Erntegutes (24) durch die Auswerte- und Steuervorrichtung (34) bestimmbar und einstellbar ist.

8. Verfahren zur Regelung der Geschwindigkeit für eine Erntevorrichtung (10) mit einer Erntegut (24) abgebenden landwirtschaftlichen Erntemaschine (12) mit einer um einen Schwenkwinkel (ϕ) verschwenkbaren Überladevorrichtung (22) zum Überladen des Erntegutes (24), und einem das Erntegut (24) in einem Auftreffpunkt (38,40) aufnehmenden Transportfahrzeug (14),
**dadurch gekennzeichnet, dass**
ein Soll-Schwenkwinkel (ϕₛₒₗₗ) zur Abgabe des Erntegutes (24) und der Auftreffpunkt (38,40) eingestellt werden, und bei einer von dem Soll-Schwenkwinkel (ϕₛₒₗₗ) abweichenden Auslenkung der Überladevorrichtung (22) eine Rückführung der Überladevorrichtung (22) bei im Wesentlichen unveränderter Position des Auftreffpunktes (38,40) auf den Soll-Schwenkwinkel (ϕₛₒₗₗ) mittels einer Änderung der Geschwindigkeit (V_{E}) der landwirtschaftlichen Erntemaschine (12) und/oder der Geschwindigkeit (V_{T}) des Transportfahrzeuges (14) geregelt wird.

9. Verfahren nach Anspruch 8 **dadurch gekennzeichnet, dass** in Abhängigkeit des Schwenkwinkels (ϕ) ein Abstand (x) eines freien, das Erntegut (24) abgebenden Endes (30) der Überladevorrichtung (22) zum Boden (31) variiert werden kann.

10. Verfahren nach Anspruch 8 oder 9, **dadurch gekennzeichnet, dass** der Soll-Schwenkwinkel (ϕₛₒₗₗ) derart eingestellt wird, dass ein freies Ende (30) der Überladevorrichtung (22) den größten Abstand zum Boden (31) aufweist.

11. Verfahren nach einem der Ansprüche 8 bis 10, **dadurch gekennzeichnet, dass** die Rückführung der ausgelenkten Überladevorrichtung (22) bei im Wesentlichen unveränderter Position des Auftreffpunktes (38,40) auf den Soll-Schwenkwinkel (ϕ ₛₒₗₗ) automatisch geregelt wird.

12. Verfahren nach einem der Ansprüche 8 bis 11, **dadurch gekennzeichnet, dass** der Auftreffpunkt (38,40) und/oder eine Auslenkung der Überladevorrichtung (22) manuell oder automatisch eingestellt werden.

## Claims

1. A harvesting device with an agricultural harvesting machine (12) discharging harvested material (24) with a transfer device (22) swivellable by a swivel angle (ϕₛₒₗₗ) for transferring the harvested material (24), wherein a target swivel angle (ϕₛₒₗₗ) for discharging the harvested material (ϕₛₒₗₗ) can be set, and a transport vehicle (14) receiving the harvested material (24), wherein the harvested material (24) discharged by the agricultural harvesting machine (12) impacts the transport vehicle (14) at a settable impact point (38,40), **characterized in that**
in the case of a deflection, deviating from the target swivel angle (ϕₛₒₗₗ), of the transfer device (22) a return of the transfer device (22) to the target swivel angle (ϕₛₒₗₗ) can be regulated by means of a change in the speed (V_{E}) of the agricultural harvesting machine (12) and/or in the speed (V_{T}) of the transport vehicle (14), wherein the position of the impact point (38,40) remains substantially unchanged and wherein at least one evaluation and control device (34) is provided for controlling the transfer device (22) and the speed (V_{E}) of the harvesting machine (12) and/or the speed (V_{T}) of the transport vehicle (14), wherein the speed (V_{E}) of the harvesting machine (12) and/or the speed (V_{T}) of the transport vehicle (14) can be controlled by the at least one evaluation and control device (34) depending on the deflection of the transfer device (22) and **in that** a sensor device (32) is provided for determining the swivel angle (ϕ) and/or the deflection of the transfer device (22), and **in that** the impact point (38,40) of the harvested material (24) can be set automatically.

2. Harvesting device according to claim 1, **characterized in that** a clearance (x) of a free end (30), discharging the harvested material (24), of the transfer device (22) to the ground (31) varies depending on the swivel angle (ϕ).

3. Harvesting device according to claim 1 or 2, **characterized in that** the free end (30) of the transfer device (22) is at the greatest clearance to the ground (31) in the case of the target swivel angle (ϕₛₒₗₗ).

4. Harvesting device according to one of the previous claims, **characterized in that** a return of the deflected transfer device (22) to the target swivel angle (ϕ ₛₒₗₗ) can be regulated automatically.

5. Harvesting device according to one of the previous claims, **characterized in that** the transfer device (22) is automatically tracked to the set impact point (38,40).

6. Harvesting device according to one of the previous claims, **characterized in that** an operator can select at least one vehicle (12,14) which can be used for the return of the transfer device (22) and the speed (V_{E}, V_{T}) of which can be regulated.

7. Harvesting device according to one of the previous claims, **characterized in that** the impact point (38,40) of the harvested material (24) can be determined and can be set by the evaluation and control device (34).

8. Method of regulating the speed of a harvesting device (10) with an agricultural harvesting machine (12) discharging harvested material (24), with a transfer device (22) swivellable by a swivel angle (ϕ) for transferring the harvested material (24), and a transport vehicle (14) receiving the harvested material (24) in an impact point (38,40),
**characterized in that**
a target swivel angle (ϕₛₒₗₗ) for discharging the harvested material (24) and the impact point (38,40) are set, and, in the case of a deflection of the transfer device (22) deviating from the target swivel angle (ϕₛₒₗₗ), a return of the transfer device (22) in the case of a substantially unchanged position of the impact point (38,40) to the target swivel angle (ϕₛₒₗₗ) is regulated by means of a change in the speed (V_{E}) of the agricultural harvesting machine (12) and/or in the speed (V_{T}) of the transport vehicle (14).

9. Method according to claim 8, **characterized in that** a clearance (x) of a free end (30), discharging the harvested material (24), of the transfer device (22) to the ground (31) can be varied depending on the swivel angle (ϕ).

10. Method according to claim 8 or 9, **characterized in that** the target swivel angle (ϕₛₒₗₗ) is set such that a free end (30) of the transfer device (22) is at the greatest clearance to the ground (31).

11. Method according to one of claims 8 to 10, **characterized in that** the return of the deflected transfer device (22) in the case of a substantially unchanged position of the impact point (38,40) to the target swivel angle (ϕₛₒₗₗ) is regulated automatically.

12. Method according to one of claims 8 to 11, **characterized in that** the impact point (38,40) and/or a deflection of the transfer device (22) are set manually or automatically.

## Revendications

1. Un dispositif de récolte comprenant une machine agricole de récolte (12) délivrant un produit récolté (24), comprenant un dispositif de transfert (22) pivotant selon un angle de pivotement (ϕₛₒₗₗ) pour transférer le produit récolté (24), un angle de pivotement de consigne (ϕₛₒₗₗ) pour délivrer le produit récolté (ϕₛₒₗₗ) étant réglable, et comprenant un véhicule de transport (14) recevant le produit récolté (24), le produit récolté (24) délivré par la machine agricole de récolte (12) tombant, sur le véhicule de transport (14), en un point d'impact réglable (38, 40), **caractérisé en ce que**, si la déviation du dispositif de transfert (22) s'écarte de l'angle de pivotement de consigne (ϕₛₒₗₗ), un retour du dispositif de transfert (22) à l'angle de pivotement de consigne ((ϕₛₒₗₗ) est régulable en modifiant la vitesse (V_{E}) de la machine agricole de récolte (12) et/ou la vitesse (V_{T}) du véhicule de transport (14), la position du point d'impact (38, 40) restant sensiblement inchangée, et au moins un dispositif d'analyse et de commande (34) étant prévu pour commander le dispositif de transfert (22) et la vitesse (V_{E}) de la machine de récolte (12) et/ou la vitesse (V_{T}) du véhicule de transport (14), la vitesse (V_{E}) de la machine de récolte (12) et/ou la vitesse (V_{T}) du véhicule de transport (14) étant commandable par l'intermédiaire du au moins un dispositif d'analyse et de commande (34) en fonction de la déviation du dispositif de transfert (22), et **en ce qu'**un dispositif de capteur (32) est prévu pour déterminer l'angle de pivotement (ϕ) et/ou la déviation du dispositif de transfert (22), et **en ce que** le point d'impact (38, 40) du produit récolté (24) est réglable automatiquement.

2. Dispositif de récolte selon la revendication 1, **caractérisé en ce que**, en fonction de l'angle de pivotement (ϕ), une distance (x) d'une extrémité libre (30) du dispositif de transfert (22), laquelle délivre le produit récolté (24), par rapport au sol (31) varie.

3. Dispositif de récolte selon la revendication 1 ou 2, **caractérisé en ce que**, en présence du l'angle de pivotement de consigne (ϕₛₒₗₗ), l'extrémité libre (30) du dispositif de transfert (22) présente la distance maximale par rapport au sol (31).

4. Dispositif de récolte selon une des revendications précédentes, **caractérisé en ce qu'**un retour du dispositif de transfert dévié (22) à l'angle de pivotement de consigne (ϕₛₒₗₗ) est régulable automatiquement.

5. Dispositif de récolte selon une des revendications précédentes, **caractérisé en ce que** le dispositif de transfert (22) suit automatiquement le point d'impact réglé (38, 40).

6. Dispositif de récolte selon une des revendications précédentes, **caractérisé en ce que** par l'intermédiaire d'un utilisateur peut être sélectionné au moins un véhicule (12, 14) qui est utilisable pour le retour du dispositif de transfert (22) et dont la vitesse (V_{E}, V_{T}) est régulable.

7. Dispositif de récolte selon une des revendications précédentes, **caractérisé en ce que** le point d'impact (38, 40) du produit récolté (24) peut être déterminé et réglé par l'intermédiaire du dispositif d'analyse et de commande (34).

8. Procédé pour réguler la vitesse d'un dispositif de récolte (10) comprenant une machine agricole de récolte (12) délivrant un produit récolté (24), comprenant un dispositif de transfert (22) pivotant selon un angle de pivotement (ϕ) pour transférer le produit récolté (24), et comprenant un véhicule de transport (14) recevant le produit récolté (24) en un point d'impact (38, 40), **caractérisé en ce qu'**un angle de pivotement de consigne (ϕₛₒₗₗ) pour délivrer le produit récolté (24) et le point d'impact (38, 40) sont réglés, et si la déviation du dispositif de transfert (22) s'écarte de l'angle de pivotement de consigne (ϕₛₒₗₗ), un retour du dispositif de transfert (22) à l'angle de pivotement de consigne (ϕₛₒₗₗ) est régulé en modifiant la vitesse (V_{E}) de la machine agricole de récolte (12) et/ou la vitesse (V_{T}) du véhicule de transport (14) tout en conservant la position du point d'impact (38, 40) sensiblement inchangée.

9. Procédé selon la revendication 8, **caractérisé en ce que**, en fonction de l'angle de pivotement (ϕ), une distance (x) d'une extrémité libre (30) du dispositif de transfert (22), laquelle délivre le produit récolté (24), par rapport au sol (31) varie.

10. Procédé selon la revendication 8 ou 9, **caractérisé en ce que** l'angle de pivotement de consigne (ϕₛₒₗₗ) est réglé de façon qu'une extrémité libre (30) du dispositif de transfert (22) présente la distance maximale par rapport au sol (31).

11. Procédé selon une des revendications 8 à 10, **caractérisé en ce que** le retour du dispositif de transfert dévié (22) à l'angle de pivotement de consigne (ϕₛₒₗₗ) est régulable automatiquement en en conservant la position du point d'impact (38, 40) sensiblement inchangée.

12. Procédé selon une des revendications 8 à 11, **caractérisé en ce que** le point d'impact (38, 40) et/ou une déviation du dispositif de transfert (22) sont réglés manuellement ou automatiquement.
